# EUROPEAN PATENT APPLICATION

(11) **EP 1 154 599 A1**
(43) Date of publication of application: **14.11.2001**
(21) Application number: 00303873.4
(22) Date of filing: 09.05.2000
(51) Int. Cl.: H04L 12/56, H04L 29/06, H04Q 7/22

(54) **Resource reservation in 3G or future generation telecommunication network III**

(71) Applicant: LUCENT TECHNOLOGIES INC., Murray Hill, New Jersey 07974-0636 (US)
(72) Inventor: Chen, Xiaobao X., Swindon, Wiltshire SN5 5DQ (GB)
(74) Representative: Williams, David John

(57) **Abstract**

In the UMTS, resource reservation is provided by translating Resource reservation Protocol context messages into and out of Packet Data Protocol messages, the processing being carried out by the translation interface (31) of a mobile terminal (30) which has associated terminal equipment (32); the terminal equipment can then be GPRS/UMTS unaware. The RSVP messages are mapped between the mobile terminal (30) and the Gateway support node (26) and regenerated as appropriate.

## Description

This invention relates to telecommunications networks operating the Internet Protocol (IP), and relates especially to a method of reserving resources.

In third generation (3G) telecommunications networks, such as Universal Mobile Telecommunication System (UMTS), broad bandwidth is provided for services such as data and multimedia in addition to voice. An obvious need is that required Quality of Service (QoS) should be provided to users, but in IP networks, if contention for resources is not resolved, then QoS cannot be guaranteed.

In IP networks or the Internet in general, Resource reSerVation Protocol (RSVP) is used to allow the network to reserve resources so as to provide QoS. RSVP can be used for QoS control locally or it may be used across IP networks.

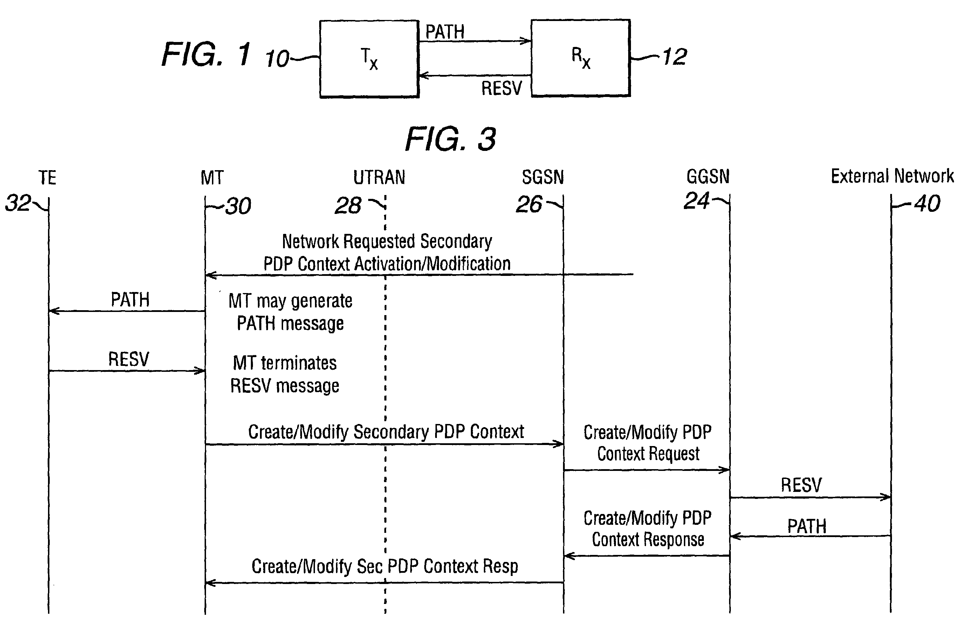

RSVP is an end-to-end protocol and is illustrated in Figure 1. A transmitting user 10 sends to a receiving user 12 a message PATH. The PATH message carries the traffic characteristics information such as Tspecs to indicate the traffic behavior that is to be sent from the user 10. When the receiving user receives the PATH message, it sends a RESV message which contains QoS requests such as FlowSpecs. In practice, the transmitting and receiving users 10, 12 can be located remotely so that PATH and RESV messages pass through several nodes in UMTS. As each node receives either of the messages, it makes a decision as to whether adequate resources in that node can be reserved. If this is possible, then the messages are relayed to the next hop for the PATH message and to the previous hop for the RESV message. When the RESV message reaches the transmitting user 10, it begins to transmit data.

Periodic refresh messages are sent subsequently to maintain the QoS status at each node in which it has been set up.

RSVP messages need to pass from the Mobile Terminal (MT) to the Radio Access Network (RAN) and then to the Core Network formed by the CN Edge and the Gateway GPRS Support Node of the GPRS/UMTS. Passage of additional RSVP messages means that extra radio resources must be allocated to guarantee that the RSVP messages can pass through the air interface reliably and instantly. Lost or delayed RSVP messages mean longer or failed call set-up, and even dropped calls, and loss of QoS guarantee during handover.

At the TSG-SA Working Group 2 Meeting no. 12 in Tokyo, 6-9 March 2000, a disclosure was made by applicant of an arrangement in which a mobile system using RSVP was able to communicate with a non-RSVP application in associated terminal equipment (TE); RSVP messages to and from the TE are intercepted by the mobile terminal and translated into and out of secondary PDP Context messages by the mobile. The mobile analyses the RSVP parameters carried in the PATH message, and determines whether to create a new secondary PDP context or to modify an existing context. In both cases an updated QoS status is provided. The secondary PDP context is then created/modified using existing PDP context control procedures.

On successful establishment of a secondary PDP Context, the mobile activates an RSVP proxy to terminate RSVP messages. The RSVP proxy is responsible to receiving and processing the PATH messages and generating the RESV messages in response.

However, it is necessary to provide a proxy in the mobile terminal, which adds to cost and complexity.

It is an object of the invention to provide an improved arrangement which does not add to cost or complexity of the mobile terminal.

According to the invention, in a third or future generation telecommunication network, a method of allocating resources for user traffic passing between a mobile terminal and a remote user, there being terminal equipment associated with the mobile terminal, characterized in that Resource reSerVation Protocol messages are processed only within the mobile terminal.

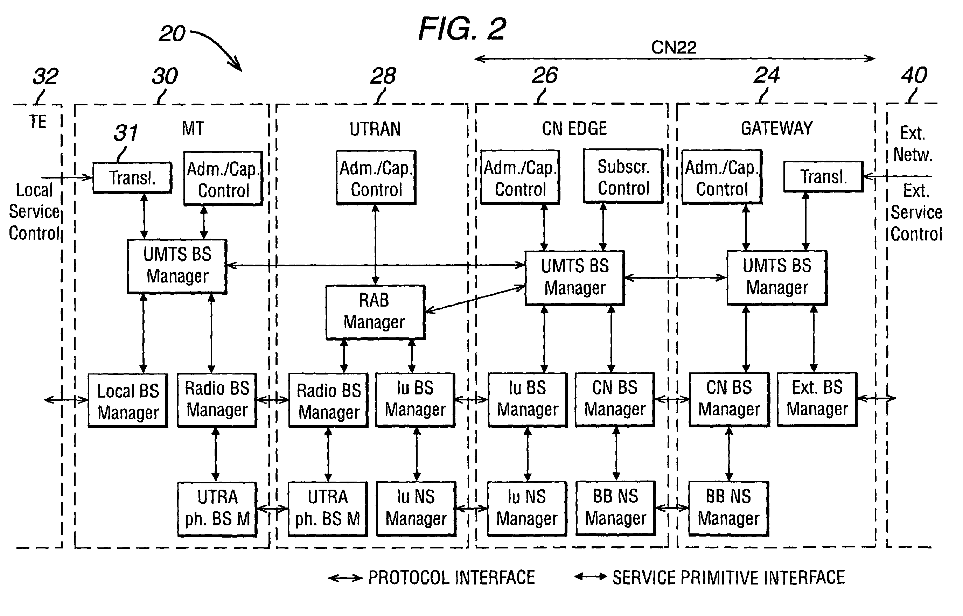

In the accompanying drawings, Figure 1 illustrates the operation of RSVP. The invention will be described by way of example only, with reference to figures 2 and 3 in which:-
Figure 2 illustrates schematically the UMTS QoS architecture for the control plane; and
Figure 3 illustrates the interchange of messages in a downlink.

In Figure 2 the UMTS 20 comprises a Core Network (CN) 22 formed by a Gateway GPRS Support Node 24 and a CN Edge 26; there is also a UMTS Terrestrial Radio Access Network (UTRAN) 28. A MT 30 communicates with the UTRAN 28 across a radio interface. The MT 30 is connected to Terminal Equipment (TE) 32 which runs non-UMTS specific applications. The MT 30 is UMTS specific, and is capable of processing the traffic from the TE 32 to channel it appropriately to the UMTS, usually to the radio access network.

The Gateway 24 communicates with an External Network 40.

The UMTS 20 operates the application-specific Packet Data Protocol (PDP) context as usual to negotiate the QoS and activate the QoS control between the MT 30 and UMTS network 20.

Figure 3 shows the message exchanges in a downlink. For traffic QoS control in the downlink, the RSVP processing entity in the MT 30 needs to be triggered. On receipt of a PATH message from the TE 32, the MT 30 forwards the message; the MT 30 decides whether to modify an existing PDP Context message or to create a new secondary PDP context message.

The secondary PDP Context message is passed through the UTRAN 28 to the CN Edge 26, which passes a create/modify PDP Context Request message to the Gateway 24, which filters out the PATH message and passes it to the External Network 40. On receipt of a RESV message in return, the process is reversed.

The MT 30 extracts the TrafficSpecs (eg Tspecs of IntServ) in a PATH message and applies it to the traffic characterization. For a RESV message, the MT extracts the QoS specs, eg FlowSpecs of IntServ, and applies the QoS requirements. The process is also carried out by the receiving TE in the External Network 40.

The MT 30 extracts the Traffic Specs, such as Tspecs of IntServ, in a PATH message and applies it to the traffic characterization. For a RESV message, the MT extracts the QoS Specs, such as FlowSpecs of IntServ, and applies the requirements.

It is now proposed that in the MT 30, the existing translation interface 31 (see Fig.2) filters the RSVP message and interprets the QoS requirements that are carried in the RSVP messages and converts them into the QoS profile of GPRS/UMTS PDP context.

When an RSVP message is generated by the generic RSVP interface at the TE32 and is then passed to the translation interface 31 in the MT 30, the translation interface 31 converts the QoS objects into the PDP context QoS profile which complies with the QoS definitions of GPRS/UMTS.

A simple mapping relationship is:
RSVP Guaranteed Service (GS) = > GPRS/UMTS
Conversational Service Class
RSVP Controlled Load Service (CL) = > GPRS/UMTS
Streaming Service Class and Interactive Service Class
Best-effort Service (BE) = > GPRS/UMTS
Background Service Class

The above mapping relationship between RSVP services and the GPRS/UMTS services are maintained in the Gateway 24 and the MT with further extension on the PDP context to accommodate the mapping content. After the PDP context is set up, the Gateway 24 regenerates the RSVP message that originates from the MT (or the TE) and relays it to the intended remote end (the receiving application) in the External Network 40.

Upon receiving the RESV message sent from the remote end as a reply to the MT-originated PATH message, the Gateway 24 terminates a message and notifies the receipt of an RSVP message from the remote peer end to the MT. The translation interface will then re-map the GPRS/UMTS QoS classes into RSVP QoS objects and regenerates an RSVP message as a reply from the remote peer end application to the RSVP originating application at the TE.

Thus the RSVP messages are not transmitted through the UTRAN but are mapped and recreated when appropriate.

The advantages of the functions performed at the MT 30 are that
a) The MT can be upgraded quickly to cater for new features in the QoS control API (Application Programming Iinterface)
b) Allows access independent API at the application level
c) Allows interface specific controls to override non-interface specific settings for non-mobile aware applications
d) Allows tight customer control of expensive radio resources
e) Allows appropriate control of the radio access regardless of whether it is an IP service or a PPP (Point to Point Protocol) service being provided
f) The MT under the control of the end application can determine by using RSVP whether to modify an existing PDP context or create a new PDP context to provide the QoS needs of each RSVP session.
The MT 30 and SGSN 24 or GGSN 26 are also required to check if RSVP messages are a) sent/received for the first time so as to initiate PDP Context set-up if appropriate; b) modified, in order to initiate PDP Context Modification procedure if appropriate; or c) merely refresh messages to trigger local generation of response.

The MT 30 and the GGAN 24 also need to check if RSVP messages are a) sent/received for the first time, so as to initiate PDP context set up; b) modified, so as to initiate PDP context modification procedure; or c) merely refresh messages to trigger local generation of responses.

A further advantage of use of the inventive method is that the Terminal Equipment 32 can be GPRS/UMTS unaware and can therefore be generic

## Claims

1. In a third or future generation telecommunication network, a method of allocating resources for user traffic passing between a mobile terminal (30) and a remote user, there being terminal equipment (32) associated with the mobile terminal, **characterized in that** Resource reSerVation Protocol messages are processed only within the mobile terminal.

2. A method according to Claim 1 in which said messages are processed by a translation interface (31) within the mobile terminal (30)

3. A method according to Claim 2 in which the translation interface (31) is arranged to translate Resource reSerVation Protocol messages into and out of Packet Data Protocol Context messages.

4. A method according to Claim 2 or Claim 3 in which the translation interface (31) is arranged to map the Resource reSerVation Protocol messages.

5. A method according to any preceding Claim in which Resource reSerVation Protocol messages are also mapped by the Gateway support node(26).
